# FASCICULE DE BREVET EUROPEEN

(11) **EP 2 589 202 B1**
(45) Date de publication et mention de la délivrance du brevet: **02.05.2018**
(21) Numéro de dépôt: 11738005.5
(22) Date de dépôt: 22.06.2011
(51) Int. Cl.: H04L 29/08, H04L 29/06

(54) **PROCÉDÉ ET SYSTÈME DE GESTION DE SESSIONS DE COMMUNICATION**
VERFAHREN UND SYSTEM ZUR VERWALTUNG VON KOMMUNIKATIONSSITZUNGEN
METHOD AND SYSTEM FOR MANAGING COMMUNICATION SESSIONS

(30) Priorité: 30.06.2010 FR 1002782
(43) Date de publication de la demande: 08.05.2013
(73) Titulaire: Orange, 75015 Paris (FR)
(72) Inventeur: STEPHAN, Emile, F-22560 Pleumeur Bodou (FR); FROMENTOUX, Gaël, F-22560 Ile Grande (FR); FIEAU, Frédéric, F-22700 Perros Guirec (FR)
(74) Mandataire: Regimbeau
(86) Numéro de dépôt international: PCT/FR2011/051438
(87) Numéro de publication internationale: WO 2012/001270

(56) Documents cités:
- US-A1- 2006 268 932
- US-A1- 2008 247 348
- US-A1- 2009 287 826

## Description

La présente invention concerne la gestion de sessions de communication lors de l'accès, à partir d'un équipement utilisateur, à des services fournis par des dispositifs ressources d'un réseau de communication.

L'expansion des réseaux supportant le protocole Internet durant les deux dernières décennies a multiplié le nombre de services offerts aux usagers, tels que des services d'applications multimédia (ou télévision sur IP), des sites web, des applications web (voix, téléphonie sur IP, messagerie instantanée, etc.), etc.

Pour ces services, un grand nombre de sessions de communication sont mises en oeuvre au travers de connexions point à point (TCP pour *"Transmission Control Protocol"*, c'est-à-dire en mode connecté) entre un terminal d'utilisateur (ou tout autre équipement de l'utilisateur tel qu'une passerelle domestique) et des serveurs sources offrant les services concernés. Ces connexions ou sessions de communication TCP permettent de garantir une qualité de service QoS ou une bande passante. De façon connue en soi, une session de communication type TCP comprend généralement l'établissement d'une connexion, le transfert de données, et la fin de la connexion.

Pour optimiser l'utilisation du réseau en termes de QoS et de bande passante utilisées, le serveur source utilisé est généralement placé au plus près des utilisateurs finaux. C'est le cas par exemple des serveurs de contenus intégrés dans un réseau de distribution de contenus (CDN pour *"Content Delivery Network"*) détenu par un opérateur local également fournisseur d'accès pour les utilisateurs.

Les utilisateurs souhaitent toutefois pouvoir accéder simultanément à plusieurs services depuis leurs terminaux, sans pour autant que ces services sollicités soient proposés par un même opérateur. C'est ce que l'on appelle la convergence de services.

Aujourd'hui cet accès simultané à plusieurs services requiert l'établissement de plusieurs connexions ou sessions TCP entre un équipement de l'utilisateur et les différents serveurs supportant les services demandés, aux fins d'obtenir les données relatives à chaque service.

Or ces connexions ou sessions TCP sont "aveugles" les unes des autres, créant ainsi une concurrence dans la négociation de la qualité de service ou d'autres paramètres de communication. En effet, aucun équipement dans le réseau ne possède une vue d'ensemble des différentes sessions établies par un même utilisateur.

Un inconvénient majeur de cette compétition aveugle est qu'elle peut réduire de façon substantielle l'efficacité du réseau de communication dans sa partie terminale (la plus critique en termes de répartition des ressources pour ne pas dégrader les services), provoquant la dégradation possible de certains services.

Il existe donc un besoin d'améliorer cette gestion dans un contexte de convergence de services.

A cet effet, l'invention concerne tout d'abord un procédé de gestion de sessions de communication lors de l'accès, à partir d'un équipement utilisateur, à des services fournis par des dispositifs ressources d'un réseau de communication, le procédé comprenant une étape d'établissement d'une première session de communication entre un premier équipement du réseau et l'équipement utilisateur pour la transmission de données relatives à un premier service, **caractérisé en ce qu**'il comprend:
une étape d'interception d'un message généré lors de l'établissement d'un accès à un deuxième service par l'équipement utilisateur pour contrôler une redirection dudit équipement utilisateur vers le premier équipement du réseau aux fins d'obtenir des données relatives au deuxième service, et
une étape d'assemblage, par le premier équipement, de données relatives au deuxième service et reçues d'un dispositif ressource correspondant, avec les données relatives au premier service, de sorte à transmettre l'ensemble des données à l'équipement utilisateur via ladite première session de communication.

L'invention permet de réduire la compétition entre les sessions relatives aux services accédés par l'utilisateur et donc d'améliorer l'utilisation du réseau de communication dans sa partie terminale. Cette réduction est obtenue en utilisant une seule session de communication pour transmettre les données relatives aux différents services. Et notamment, elle est obtenue en interceptant un message (requête ou message de signalisation par exemple) relatif à l'accès au deuxième service pour piloter une redirection de l'utilisateur vers cette session de communication, et en assemblant ou combinant les données de plusieurs services au sein de cette même session de communication.

Le premier équipement de réseau selon l'invention gère ainsi plusieurs accès à des services pour le compte d'un utilisateur et dispose par conséquent d'une vision globale des services établies par ce même utilisateur. Cette vision globale permet par exemple de mettre en place de façon aisée des règles de gestion des sessions concurrentes pour ajuster par exemple la consommation (bande passante, QoS) pour chacun des accès, en fonction des autres communications. Une meilleure exploitation des ressources réseau selon les services souhaités et leur évolution dans le temps (apparition d'un service, suppression d'un service, modification d'un service, etc.) est ainsi obtenue.

L'équipement de l'utilisateur peut revêtir la forme d'un terminal (ordinateur, téléphone intelligent, etc.) mais également de toute entité de l'environnement domestique telle qu'une passerelle domestique fournie par un fournisseur d'accès Internet.

Dans un mode de réalisation, le message intercepté est une première requête de découverte et d'attachement de services, par exemple une requête DNS ("*Domain Name System" -* généralement la première requête émise par le terminal utilisateur pour résoudre un nom de domaine associé au deuxième service, par exemple un site web), relative au deuxième service et émise par l'équipement utilisateur, et le procédé comprend, en réponse à cette première requête, la transmission audit équipement utilisateur d'une adresse réseau dudit premier équipement du réseau pour qu'il s'y connecte afin d'accéder audit deuxième service. L'invention trouve une application particulière lorsque c'est l'équipement utilisateur qui initie l'accès au deuxième service, car dans ce cas des mécanismes permettant de rediriger l'utilisateur tout en conservant au sein dudit premier équipement des données identifiant le second service sollicité peuvent être mis en oeuvre.

Selon une caractéristique particulière, le procédé comprend une étape de détermination, en fonction dudit deuxième service visé par ladite première requête interceptée, de ladite adresse réseau transmise parmi une pluralité d'adresses réseau disponibles pour accéder au premier équipement et associées à une pluralité respective de services. Cette disposition permet au premier équipement, qui joue ici un rôle central, de mémoriser indirectement le service sollicité dans le message alors que la conversion du message intercepté en une adresse de redirection pour l'utilisateur est susceptible de faire disparaître l'information sur le service sollicité. En effet, en réservant un ensemble d'adresses réseau (par exemple IP) uniquement pour ces redirections, l'association adresse réseau-service assure qu'à tout instant, le premier équipement est en mesure de déterminer rapidement, à réception d'un message sur l'une de ces adresses, le service concerné, pour par exemple se connecter au dispositif ressource correspondant et récupérer les données associées.

En outre, cette disposition permet de conserver les mécanismes classiques de requête/réponse DNS (dans le cas d'une interception d'une telle requête) sans adaptation pour les équipements utilisateurs. En effet, seule une adresse réseau est renvoyée à la requête DNS. Ainsi, la redirection est transparente pour l'équipement utilisateur et l'identification du deuxième service est alors déportée au niveau du premier équipement.

Selon une caractéristique particulière de l'invention, le procédé comprend, en réponse à une requête d'accès au deuxième service émise par l'équipement utilisateur sur l'adresse réseau du premier équipement qui a été transmise, une étape d'établissement d'au moins une deuxième session de communication entre le dispositif ressource fournissant le deuxième service et le premier équipement pour la transmission des données relatives au deuxième service, pour le compte dudit équipement utilisateur.

La session de communication pour le deuxième service, qui est traditionnellement établie directement entre l'utilisateur et le deuxième équipement, est ici modifiée en une combinaison d'une connexion entre le premier équipement et le dispositif ressource, avec la connexion ou session de communication déjà existante entre le premier équipement et l'utilisateur. Le premier équipement jour donc un rôle de relais comme il sera décrit plus en détail par la suite.

Par cette disposition, l'invention s'avère être une solution dite "ouverte" en ce qu'elle ne requiert pas la modification du fonctionnement des serveurs et plateformes de services qui sont fournis par des tiers (ici le dispositif ressource). Seul le premier équipement qui jour un rôle central dispose de moyens appropriés à la mise en oeuvre de l'invention comme explicités par la suite.

Et notamment, le procédé comprend une étape de détermination, en fonction de l'adresse réseau recevant la requête d'accès au deuxième service, dudit dispositif ressource à utiliser pour la deuxième session de communication. Cette détermination s'avère être particulièrement simple à mettre en oeuvre lorsque les adresses IP du premier équipement sont associées aux services, comme évoqué ci-dessus.

En particulier, ledit dispositif ressource est déterminé parmi une pluralité de dispositifs ressources associés (dans une table de correspondances notamment) audit deuxième service et en fonction d'une distance (qui peut notamment être minimale en terme de routage ou de réponse) entre ledit premier équipement et les dispositifs ressources associés au deuxième service. En variante ou en combinaison, on peut déterminer le dispositif ressource (c'est-à-dire le choisir parmi une pluralité de dispositifs ressources) en fonction de la charge respective des dispositifs ressources disponibles. Cette disposition a vocation à optimiser l'utilisation du réseau de communication dans sa partie terminale (vers les utilisateurs finaux).

En variante ou en combinaison, la requête d'accès renseigne une adresse URL dans le deuxième service, et la détermination du dispositif ressource est fonction de l'adresse URL.

Selon un mode de réalisation, ledit dispositif ressource est déterminé à partir d'une table de correspondances référençant une pluralité de dispositifs ressources et les services associés qu'ils fournissent, et le procédé comprend l'enregistrement d'au moins un nouveau dispositif ressource dans ladite table de correspondances à l'initiative de ce nouveau dispositif ressource. Cette disposition améliore l'accès aux services par les utilisateurs, aussi bien en termes de dynamicité que d'administration ou de gestion (ou OAM selon la terminologie anglo-saxonne) de ces services.

Selon une caractéristique particulière, ladite première session de communication est une session à signalisation bidirectionnelle pour la transmission des données relatives aux dits services. On entend par "*session bidirectionnelle en termes d'échange d'événements"* ou *"session à signalisation bidirectionnelle*" une session dans laquelle des événements (ou requêtes, ou encore flux de contrôle) peuvent être transmises non seulement du terminal ou équipement utilisateur au serveur, mais également du serveur au terminal. Des données peuvent ainsi être envoyées du serveur au terminal sans nécessiter au préalable une requête *ad-hoc* du terminal. Les échanges de données entre client et serveur peuvent ainsi être asynchrones. Une telle session fonctionne de préférence en mode bidirectionnel simultané (ou "*full duplex*" selon le terme anglo-saxon).

Ce peut être par exemple une session TCP ("*Transmission Control Pratocof*"). Une telle session est obtenue dans les exemples proposés ici en transformant une session HTTP ("*HyperText Transfer Protocol*") en Websocket et mettant en oeuvre l'API Server-Sent Event. Cette disposition permet d'organiser, entre l'équipement utilisateur et le premier équipement de réseau, les conditions d'assemblage des flux de données relatifs aux différents services accédés.

On peut prévoir l'émission préalable, par le premier équipement et à destination de l'équipement utilisateur, d'une demande de mise à niveau de ladite première session de communication en une session à signalisation bidirectionnelle. Ainsi, c'est à l'initiative du premier équipement (qui met en oeuvre l'assemblage) que la session initiale (par exemple HTTP) sera transformée en session signalisation bidirectionnelle, particulièrement adaptée pour transmettre les données assemblées du premier équipement à l'utilisateur.

Par ailleurs, en réponse à la requête d'accès au deuxième service émise par l'équipement utilisateur sur l'adresse réseau du premier équipement qui a été transmise, le premier équipement renvoie, dans ladite session à signalisation bidirectionnelle, un événement à l'équipement utilisateur lui indiquant que les données de réponse à la requête d'accès seront transmises via ladite session à signalisation bidirectionnelle. Cette disposition permet de rediriger de façon simple l'utilisateur (souhaitant accéder à un deuxième service) vers la première session de communication tout en mettant fin à l'éventuelle session basée sur la requête d'accès au deuxième service.

Par ailleurs, des flux de contrôle relatifs à l'accès au deuxième service sont transmis dans ladite première session à signalisation bidirectionnelle et relayés par ledit premier équipement vers ou depuis le deuxième équipement au travers de la deuxième session de communication. Cette disposition assure qu'une seule session, par exemple TCP, est gérée au niveau de l'équipement utilisateur pour l'accès à plusieurs services. Une gestion individualisée des accès à plusieurs services mais en tenant compte des autres accès concurrents peut ainsi être mise en oeuvre.

Dans un mode de réalisation, ledit premier équipement de réseau héberge un serveur de contenus d'un réseau de distribution de contenus multimédia, et ledit premier service est un service multimédia de télévision sur IP. Le réseau de distribution de contenus IPTV permet notamment d'avoir, pour un fournisseur d'accès, des serveurs de contenus au plus près des utilisateurs finaux.

Dans un mode de réalisation, ledit assemblage est fonction de règles prédéfinies d'ajustement des données relatives aux services. Par exemple il peut s'agir d'un ajustement par transformation (transcodage, changement de format, etc.) des données pour s'ajuster à la bande passante disponible, ou par priorisation des services de telles sortes que les données relatives au service prioritaire (flux en direct) sont transmises via la première connexion de façon prioritaire par rapport à un service moins urgent (téléchargement par exemple). Ces règles prédéfinies sont par exemple mémorisées au sein du premier équipement bien que certaines d'entre elles puissent être définies par l'utilisateur (auquel cas elles sont transmises au préalable de l'utilisateur au premier équipement comme expliqué dans l'exemple décrit plus loin).

Ces règles peuvent correspondre à des préférences de l'utilisateur, d'un opérateur gérant le réseau de communication ou de ressources disponibles (par exemple le type d'accès réseau pour l'utilisateur, la capacité du réseau, les caractéristiques des terminaux, etc.). A titre illustratif, une transformation peut être une modification de format selon les ressources disponibles pour s'ajuster à la bande passante disponible.

Selon un mode de réalisation, l'invention concerne un procédé de gestion des sessions de communication lors de l'accès, à partir d'un équipement utilisateur, à des services fournis par des dispositifs ressources d'un réseau de communication, le procédé comprenant les étapes suivantes dans lesquelles:
une première session de communication (notamment TCP) est établie entre un serveur de contenus d'un réseau local de distribution de contenus multimédia et l'équipement utilisateur pour la transmission de données d'un session de télévision sur IP;
l'équipement utilisateur envoie une requête de découverte et d'attachement de services (type DNS, DHCP ou ARP) relative à un service web à accéder;
la requête est interceptée et traitée de sorte à transmettre, à l'équipement utilisateur, une adresse réseau du serveur de contenus qui est associée au service web;
l'équipement utilisateur envoie, sur ladite adresse réseau du serveur de contenus, une requête HTTP d'accès à une partie dudit service web en combinant une adresse URL relative du site web avec ladite adresse réseau du serveur de contenus;
à réception de ladite requête HTTP d'accès, le serveur de contenus identifie un serveur web associé au service web grâce à l'adresse réseau de réception, et émet, au serveur web, une requête d'accès à l'adresse URL relative pour obtenir des données du service web,
le serveur de contenu assemble les données du service web reçues du serveur web avec les données de la session de télévision sur IP, de sorte à transmettre l'ensemble des données à l'équipement utilisateur via ladite première session de communication.

Cette configuration correspond à une application privilégiée où un utilisateur regardant un film souhaite accéder à l'Internet en même temps. La gestion selon l'invention permet d'optimiser l'utilisation du réseau, notamment pour le fournisseur d'accès Internet qui propose le service de télévision sur IP. De façon optionnelle, ce procédé peut comprendre des caractéristiques se rapportant aux étapes définies précédemment.

Selon un aspect, l'invention a également comme objet un procédé de gestion de l'accès, à partir d'un équipement utilisateur, à des services fournis par des dispositifs ressources dans un réseau de communication, le procédé comprenant la transmission de données relatives à un premier service dans une session de communication établie entre un premier équipement du réseau et l'équipement utilisateur, **caractérisé en ce qu**'il comprend:
une étape de mise à jour de la session de communication en une session à signalisation bidirectionnelle
une étape de redirection de l'équipement utilisateur souhaitant accéder à un deuxième service vers ledit premier équipement
une étape d'assemblage, par le premier équipement, de données relatives au deuxième service et reçues d'un dispositif ressource correspondant, avec les données relatives au premier service, de sorte à transmettre l'ensemble des données à l'équipement utilisateur via ladite session de communication à signalisation bidirectionnelle.

Ce procédé présente des avantages similaires à ceux exposés précédemment, et peut mettre en oeuvre des caractéristiques décrites précédemment, telles que par exemple la prise en compte de règles prédéfinies (par exemple des paramètres utilisateurs) pour contrôler l'assemblage des données.

L'invention concerne également un dispositif d'un réseau comprenant des moyens pour établir une première session de communication avec un équipement utilisateur pour la transmission de données relatives à un premier service auquel l'équipement utilisateur accède, **caractérisé en ce qu**'il comprend:
des moyens pour recevoir, de l'équipement utilisateur, une requête d'accès correspondant pour l'équipement utilisateur à une requête d'accès à un deuxième service fourni par un dispositif ressource;
des moyens pour déterminer, à partir de la requête d'accès reçue, un dispositif ressource mettant en oeuvre ledit deuxième service et pour établir une deuxième session de communication avec le dispositif ressource déterminé de sorte à obtenir des données relatives au deuxième service; et
des moyens d'assemblage de données relatives au deuxième service et reçues du dispositif ressource, avec les données relatives au premier service, de sorte à transmettre l'ensemble des données à l'équipement utilisateur via ladite première session de communication.

Ce dispositif présente des avantages similaires à ceux du procédé exposé ci-dessus, et notamment celui de réduire le nombre de connexions ou sessions TCP concurrentes sur la partie terminale du réseau, qui sont mises en oeuvre par un utilisateur souhaitant accéder à plusieurs services.

Dans un mode de réalisation, le dispositif comprend une pluralité d'adresses réseau associées à une pluralité respective de services, et les moyens pour déterminer sont configurés pour déterminer ledit dispositif ressource en fonction de l'adresse réseau recevant la requête d'accès.

En outre, lorsque ladite première session de communication est une session à signalisation bidirectionnelle, le dispositif peut être configuré pour, à réception de la requête d'accès, envoyer, via ladite session à signalisation bidirectionnelle, un événement à l'équipement utilisateur lui indiquant que les données de réponse à cette requête seront transmises via la session à signalisation bidirectionnelle.

Notamment, ledit dispositif est un serveur de contenus d'un réseau de distribution de contenus (CDN).

Par ailleurs, le dispositif peut être configuré pour émettre à l'équipement utilisateur une demande de mise à niveau de ladite première session de communication en une session à signalisation bidirectionnelle.

Selon des caractéristiques particulières, ce dispositif peut comprendre des moyens d'interception de message en rapport avec l'interception évoquée précédemment; une table de correspondances ou une fonction de traduction telle qu'évoquée par la suite.

L'invention concerne également un système de gestion de sessions de communication lors de l'accès, à partir d'un équipement utilisateur, à des services fournis par des dispositifs ressources d'un réseau de communication, le système comprenant:
des moyens pour établir une première session de communication entre un premier équipement du réseau et l'équipement utilisateur pour la transmission de données relatives à un premier service;
des moyens d'interception d'un message généré lors de l'établissement d'un accès à une deuxième service par l'équipement utilisateur pour contrôler une redirection dudit équipement utilisateur vers le premier équipement aux fins d'obtenir des données relatives au deuxième service, et
dans lequel le premier équipement comprend des moyens d'assemblage de données relatives au second service et reçues d'un dispositif ressource correspondant, avec les données relatives au premier service, de sorte à transmettre l'ensemble des données à l'équipement utilisateur via ladite première session de communication.

Le système de gestion présente également des avantages similaires à ceux du procédé exposé ci-dessus, notamment celui de réduire le nombre de sessions (type TCP) concurrentes sur la partie terminale du réseau qui sont mises en oeuvre par un équipement utilisateur souhaitant accéder à plusieurs services. De plus, la combinaison des techniques WebSocket et HTML5 permet par exemple une cohabitation aisée des services sur une page web, et ainsi un assemblage simplifié.

De façon optionnelle, le système peut comprendre des moyens se rapportant aux caractéristiques de procédé évoquées précédemment.

En particulier, le système peut comprendre une table de correspondances comprenant, pour chaque équipement d'une pluralité de premiers équipements disposant de dits moyens d'assemblage, l'association d'une pluralité d'adresses réseau de l'équipement à une pluralité correspondante de dispositifs ressources mettant en oeuvre des services. Le système est alors configuré pour, en réponse à l'interception d'une requête relative au deuxième service et émise par l'équipement utilisateur, transmettre audit équipement utilisateur une adresse réseau déterminée dans ladite table en fonction au moins dudit deuxième service.

Dans un mode de réalisation, le système comprend:
un serveur de contenus d'un réseau de distribution de contenus multimédia apte à établir une première session de communication (par exemple TCP) avec l'équipement utilisateur pour transmettre des données relatives à une session de télévision sur IP;
un moyen d'interception d'une requête de découverte et d'attachement de services (DNS, DHCP, ERP, etc.) relative à un service web à accéder et émise par l'équipement utilisateur;
un serveur de gestion:
   o mémorisant l'établissement de la première session de communication entre l'équipement utilisateur et le serveur de contenus
   o apte à réorienter, suite à l'interception de la requête, ledit équipement utilisateur vers une adresse réseau du serveur de contenus associée audit service web;
et dans lequel le serveur de contenus est configuré pour, à réception sur une dite adresse réseau d'une requête HTTP d'accès à une partie dudit service web en provenance dudit équipement utilisateur, identifier un serveur web associé au service web grâce à l'adresse réseau de réception, et émettre une requête d'accès à ladite partie du service web sur ledit serveur web pour obtenir des données du service web;
et le serveur de contenus comprend des moyens d'assemblage des données du service web reçues du serveur web avec les données de la session de télévision sur IP, de sorte à transmettre l'ensemble des données à l'équipement utilisateur via ladite première session de communication.

En particulier, le serveur de gestion peut comprendre une table de correspondances comme évoquée précédemment. En outre, la session de communication peut être mise à niveau en une session à signalisation bidirectionnelle.

Document US-2006/268932 est intitulé "Processing communication flows in an asymmetrically routed network" et représente l'état de la technique antérieure.

D'autres particularités et avantages de l'invention apparaîtront dans la description ci-après, illustrée par les dessins ci-joints, dans lesquels :
- la **figure 1** représente une architecture fonctionnelle d'un mode de réalisation de l'invention;
- la **figure 2** représente un exemple de système pour la gestion de sessions de communication d'un terminal utilisateur selon un mode de réalisation de l'invention; et
- la **figure 3** illustre un exemple d'échanges de messages entre différents éléments du réseau pour la gestion de sessions de communication d'un terminal utilisateur selon un mode de réalisation de l'invention;

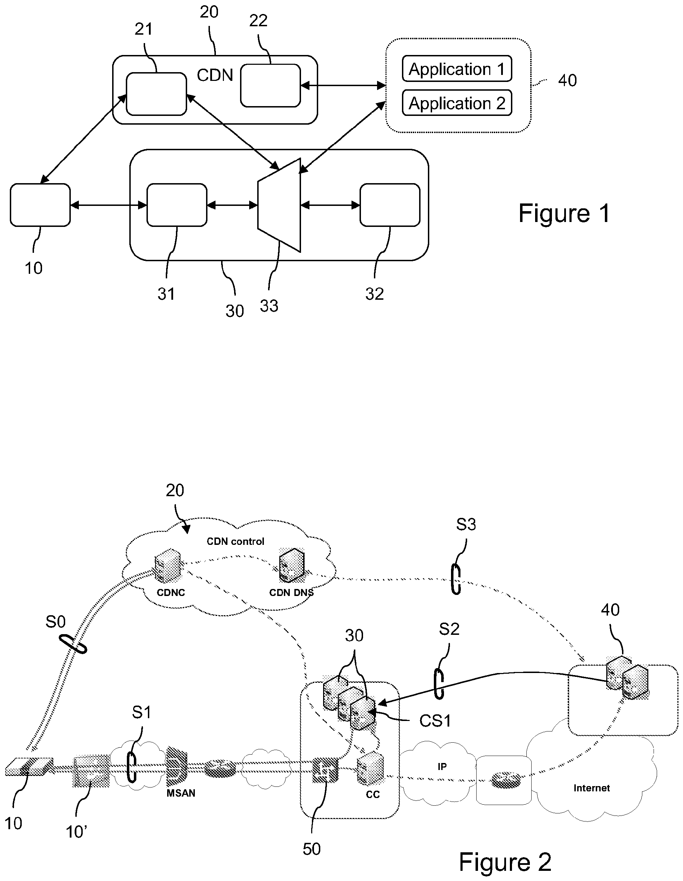

La **figure 1** représente une architecture fonctionnelle d'un mode de réalisation de l'invention dans lequel un utilisateur 10 établit tout d'abord une session de télévision sur IP (par exemple de la vidéo à la demande), avant de lancer une session Internet (téléphonie sur IP, consultations de pages/sites Internet, etc.). L'invention s'applique notamment à la convergence des services de télévision sur IP (IPTV, VOD) avec ceux de l'Internet (Web, Téléphonie sur IP) ou les services interpersonnels temps réels (IMS pour *"IP Multimedia Subsystem",* par exemple le *push-to-talk,* ou la messagerie instantanée), et permet le contrôle de l'assemblage des données de sessions IPTV, web, conversationnelles, etc. au sein d'une même "connexion point à point" ou "session de communication" prévue pour la transmission des contenus IPTV.

Le partenaire de l'utilisateur dans cette session de communication est alors à même de mener une politique de gestion dans l'assemblage des données issues des différents services accédés, notamment eu égard à des préférences ou des ressources disponibles. Comme on le verra par la suite, ce partenaire peut notamment être un équipement du réseau que détient le fournisseur d'accès Internet, dans l'optique d'améliorer la gestion de la qualité des parties terminales de son réseau.

Un terminal 10 de l'utilisateur est doté d'un navigateur web intégrant par exemple la technologie HTML5 et peut ainsi mettre en oeuvre des WebSockets permettant de convertir une connexion TCP utilisée pour une session HTTP en un canal de communication à signalisation bidirectionnelle. Le terminal 10 accède aux réseaux externes via une passerelle domestique 10'.

L'architecture de la figure montre un serveur de gestion 20, un serveur de contenus 30 et des serveurs d'applications 40 (serveur web, coeur de sous-système multimédia IP ou *"IMS"*).

Le serveur de gestion 20 et le serveur de contenus 30 forment partie d'un système autonome (AS - *Autonomous System*) géré par un opérateur, par exemple un fournisseur d'accès Internet. Ainsi ce dernier détient des équipements terminaux (il existe un grand nombre de serveur de contenus 30 notamment) au plus près des utilisateurs finaux 10, ce qui lui permet, comme on le verra par la suite, d'être sur le chemin du trafic issu des utilisateurs finaux et de pouvoir intercepter les messages de découvertes et d'attachement aux services issus des utilisateurs finaux. Dans le présent exemple, le système autonome comprend un réseau de distribution de contenus (CDN - *Content Delivery Newtork*) fournissant des services multimédias de télévision sur IP (IPTV) tels que la vidéo à la demande (VOD) ou la diffusion TV en direct avec des services personnels, notamment interactifs, associés (startover, pause, magnétoscope, etc.).

Les serveurs 40 peuvent être détenus et gérés par le même opérateur ou par des tiers. A l'heure actuelle, le réseau CDN ne prend pas en charge la distribution de contenus autres que IPTV. L'invention telle qu'exposé ci-après permet l'accès, à l'aide du réseau CDN, à n'importe quel serveur 40 sans nécessiter de modification de celui-ci.

Pour la suite, on nommera "tiers" ce qui se rapporte à ces serveurs 40 du fait qu'ils n'appartenant pas au réseau CDN dans lequel est établie une première session de communication point à point pour transmettre les données IPTV au le terminal 10.

Par ailleurs, on dénommera "services" l'ensemble des services ou applications que proposent ces différents serveurs 40 et/ou réseau CDN et auxquels l'utilisateur peut avoir accès.

Le serveur de gestion 20 du réseau CDN comprend un module de gestion ou contrôleur 21 permettant la sélection d'un serveur de contenus CS parmi l'ensemble des serveurs 30 du CDN, pour fournir un contenu IPTV à un utilisateur requérant. Notamment, le serveur 30 le plus proche de l'utilisateur 10 (celui optimisant l'utilisation de la bande passante et la qualité de service) peut être sélectionné pour établir une session IPTV, généralement une session HTTP sur une connexion TCP 31, de sorte à fournir le contenu IPTV 32. D'autres critères que la proximité géographique peuvent naturellement être utilisés pour sélectionner le serveur le plus adapté.

Le module de gestion 21 a donc connaissance de l'établissement d'une session de communication 31 entre un serveur CS et un utilisateur 10. Il mémorise cette information qui sera utilisée comme décrit par la suite.

Selon une réalisation de l'invention, le module de gestion 21 va négocier l'établissement et le contrôle des sessions avec le terminal 10 et les serveurs tiers 40 qui mettent en oeuvre des services auxquels l'utilisateur souhaite accéder.

Le module de gestion 21 va, pour cela, configurer le serveur de contenus CS supportant déjà une session de communication TCP 31 avec le terminal 10 pour qu'il se mette en relation avec les serveurs tiers 40 fournissant des services sollicités par l'utilisateur. Cette mise en relation est effectuée pour le compte du terminal 10, le serveur CS récupérant ainsi des données relatives à ces services tiers et les assemble avec les données IPTV en cours afin de les communiquer à l'utilisateur de manière unifiée via la session de communication 31 déjà existante.

Par ailleurs, le terminal 10 va être redirigé vers ce serveur de contenus CS pour chaque tentative d'accès à un nouveau service tiers, en particulier vers une adresse IP, éventuellement unicast, du serveur CS associée, à cette occasion, au service demandé. Le terminal 10 est ainsi redirigé automatiquement sans qu'une liaison soit établie directement entre lui et le serveur tiers 40 fournissant le service demandé. Le serveur de contenus agit ainsi comme relais (proxy) pour cet autre service tiers demandé.

Pour réaliser ces différentes fonctions, le module de gestion 21 dispose d'une fonction de traduction permettant de mémoriser les relations entre les différents services tiers disponibles, serveurs associés et les configurations adoptées pour les serveurs de contenus. Comme il ressortira de la suite, cette fonction de traduction peut être mise en oeuvre au travers d'une table de correspondances mémorisant les sessions de communication existantes sur les serveurs de contenus 30 du réseau CDN (avec les terminaux 10), et associant, pour chaque serveur de contenus 30, un ensemble d'interfaces logiques (des adresses IP unicast, par exemple) de ce serveur qui vont servir de portes d'entrée sur le serveur de contenus 30 pour que les terminaux 10 initient leurs accès aux services tiers.

Puis à chaque adresse IP unicast d'un serveur sont associés un service tiers (parmi les services tiers enregistrés) ainsi qu'un serveur 40 et son adresse IP pour y accéder. Eventuellement une information sur le contenu de ce serveur 40 est renseignée dans cette table, par exemple les URL relatives du service tiers qui sont effectivement hébergées sur ce serveur.

Plusieurs adresses IP, notamment des adresses IP unicast, peuvent être associées à un même service tiers, mais à des serveurs 40 distincts, permettant ainsi de jouer sur une éventuelle proximité avec le terminal requérant lors de la sélection de ce serveur.

Les serveurs de contenus 30 étant généralement répartis sur un territoire entier, l'association ci-dessus permet de configurer, pour une zone géographique précise (zone locale), un accès limité à certains serveurs tiers 40. Une application possible est celle de la régionalisation des contenus accessibles pour les utilisateurs, par exemple des contenus personnalisés en fonction des informations locales.

Comme un grand nombre de serveurs tiers 40 peut exister, cette table de correspondances peut être mise à jour périodiquement en fonction notamment des évolutions de distances en terme de routage ou de réponse entre ces serveurs 40 et le serveur de contenus 30 auquel appartient l'adresse IP unicast concernée. Ainsi, on conservera généralement les serveurs 40 les plus efficaces vis-à-vis du serveur de contenus 30.

La table de correspondances peut également être mise à jour automatiquement à partir de l'enregistrement volontaire de ces serveurs 40, via une session S3 entre le serveur 40 concerné et le module de gestion 21.

Le serveur de contenus 30 récupérant, pour le compte de l'utilisateur, les données relatives aux services accédés par ce dernier, il comprend alors un module fonctionnel d'assemblage 33 de ces données relatives aux services accédés de sorte à permettre leur transmission dans la seule et même session de communication 31 déjà existante.

A titre illustratif, il peut s'agir d'une simple fonction de *"mashup"* visant à mélanger ou combiner les données. Bien entendu, cet assemblage dépend fortement des services concernés.

L'assemblage peut par exemple être réalisé au niveau applicatif: signalisation d'un appel entrant par un icône sur le flux IPTV visionné par le terminal.

L'assemblage peut également consister à transmettre ces données dans la session de communication en utilisant des événements Web Socket et Server-Sent Events qui permettent de distinguer ces données (selon qu'elles sont relatives à tel ou tel service) au sein de cette sessions de communication.

Combiné par exemple avec un lecteur HTML5 (dont l'objectif est de fournir un plug-in vidéo), la coexistence de services tels que l'ajout d'un flux vidéo ou de voix sur IP au sein d'une page web s'avère de complexité réduite à l'aide de la présente invention, sans faire appel à un protocole propriétaire. Une telle application est donc destinée à l'ensemble des terminaux munis de navigateur (PC, mobile, téléphone intelligent, TV connectée, boîtier décodeur, etc.).

En outre, ce module d'assemblage 33 peut mettre en oeuvre des règles prédéfinies d'ajustement de l'assemblage des données entre elles, en fonction par exemple des préférences de l'utilisateur (mettre en pause une vidéo diffusée lorsque l'utilisateur répond à un appel téléphonique sur IP), d'un contexte utilisateur (par exemple son environnement informatique d'exécution, ou les ressources qu'il met en oeuvre, etc.), des préférences de l'opérateur gérant le réseau de communication (mise en priorité basse des sessions de téléchargements au profit des contenus de direct) ou de ressources disponibles (ajuster le format - haute définition ou définition standard - d'une vidéo diffusée selon le ou les services accédés en parallèle). De la sorte, le module d'assemblage permet d'appliquer une gestion particulière à chaque donnée demandée en tenant compte des autres accès sollicités par le même utilisateur.

A titre d'exemple, ces règles peuvent prioriser les services pour favoriser certains d'entre eux, peuvent modifier le codage/le format des données en fonction de la bande passante utilisée, peuvent convertir des données (signal d'un appel entrant en un icône intégré dans le flux IPTV transmis), etc.

Les préférences de l'utilisateur peuvent notamment être connues du serveur de contenus 30 opérant l'assemblage 33 par échange lors de l'établissement de la première session de communication 31. En variante, elles peuvent poussées par le terminal 10 sur le serveur de gestion 20 qui les communique ultérieurement au serveur de contenus CS opérant avec le terminal 10.

Le module 22 permet, pour sa part, au serveur de gestion 20 d'avoir connaissance des différents serveurs tiers 40 et services associés qui existent. Par exemple, de façon préalable, ces différents serveurs 40 peuvent venir s'enregistrer auprès du serveur de gestion 20 pour que soient mémorisés leur adresse IP, le service qu'ils mettent en oeuvre et éventuellement les contenus qu'ils contiennent (par exemple au travers de l'indication des adresses URL relatives qui font suite au nom de domaine d'un site web).

Cela permet au serveur 20 et au module de gestion 21 d'établir la table de correspondances précitée.

Grâce à l'assemblage selon l'invention, seule une session de communication 31 est négociée sur le réseau, ce qui réduit la concurrence en termes de négociation de QoS ou bande passante sur les parties terminales du réseau (côté utilisateurs).

En outre, chaque serveur de contenus 30 dispose désormais d'une vision globale des accès engagés par chaque terminal 10 avec lequel il dispose d'une session de communication 31. Cela permet, grâce à l'assemblage prévu dans l'invention, d'appliquer une gestion "intelligente" des accès, individuellement mais en tenant compte les uns des autres.

Bien entendu, du côté du terminal 10 une fonction de désassemblage correspondante est prévue pour permettre au terminal 10 de récupérer distinctement les données relatives à chacun des services.

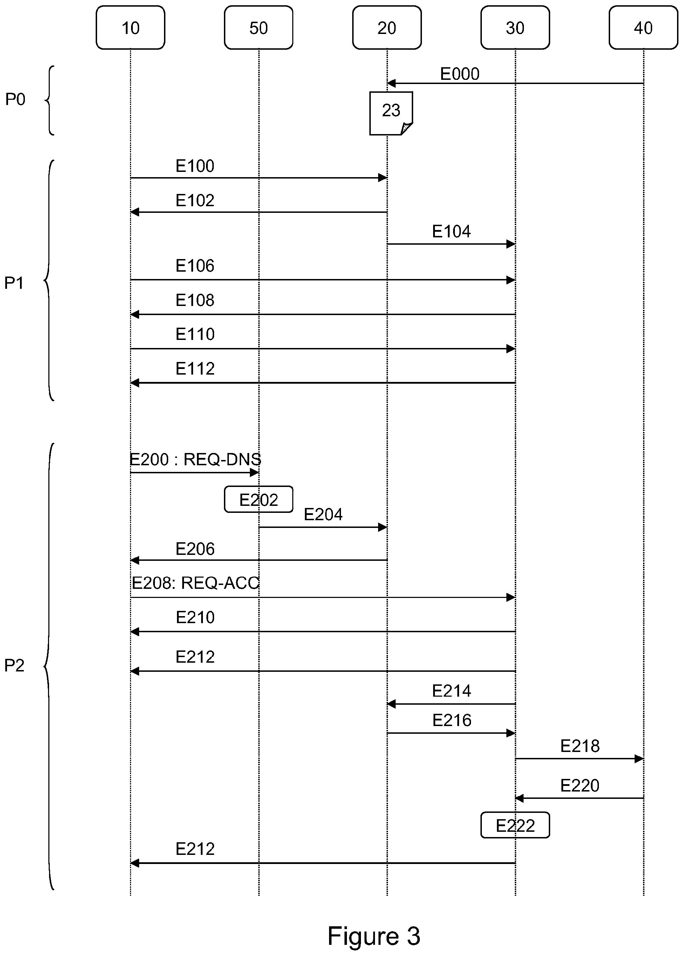

En référence aux **figures 2** et **3****,** et notamment aux étapes E100 à E112 (première phase P1), une première connexion ou session de communication TCP 31 est établie entre le terminal 10 et un serveur de contenus 30 du réseau CDN, pour supporter une session IPTV.

Le terminal utilisateur 10 peut notamment être un terminal de télévision sur IP au travers duquel l'utilisateur accède à un guide des programmes EPG pour par exemple choisir un contenu vidéo à regarder. Toutefois, tout autre type de terminal permettant d'accéder à des services peut être utilisé.

Comme évoqué précédemment une phase préalable P0 peut comprendre l'enregistrement E000 des services offerts (application 1, application 2) par les serveurs tiers 40 auprès du serveur de gestion 20. Cet enregistrement consiste notamment à fournir les noms, les URLs et les adresses IP des serveurs 40 mettant en oeuvre ces services, ainsi qu'éventuellement leurs URL relatives des contenus hébergés. Ces informations sont mémorisées dans la fonction de traduction du serveur 20, par exemple la table de correspondances 23 détaillée ci-après.

Ces informations peuvent en outre être complétées par analyse au fil de l'eau du trafic, permettant pour l'opérateur du réseau CDN de détecter de nouveaux serveurs tiers 40.

La table de correspondances 23 suivante est fournie à titre illustratif. Pour des raisons de concision, seul un service tiers (l'application web nommée www.foo.com) est indiqué, et seulement deux serveurs de contenus 30 sont renseignés.

| **Serveur de contenus 30** | **Adresse IP unicast du serveur 30** | **Serveur tiers** | **Contenus (URL relatives)** |
|---|---|---|---|
| CS1 | UNI@1 CS1 | srv4.foo.com | url1, url 3 |
| CS1 | UNI@2CS1 | srv34.foo.com | url2 |
| CS2 | UNI@1 CS2 | srv4.foo.com | url1, url 3 |
| CS2 | UNI@2CS2 | srv12.foo.com | url2, url 4 |

A l'étape E100, l'utilisateur navigue sur le guide des programmes affiché par son terminal 10. Les données EPG du guide sont récupérées par le terminal au travers d'une session HTTP S0 en mode connecté (TCP) avec un contrôleur CDNC du réseau CDN. L'utilisateur peut ainsi sélectionner un contenu C1, par exemple une vidéo à la demande. Cette sélection est reçue par le contrôleur CDNC.

A l'étape E102, ce même contrôleur CDNC sélectionne, parmi les serveurs de contenus 30 du réseau CDN, le serveur (disons CS1) le plus à même de fournir le contenu C1 demandé, typiquement un serveur à proximité géographique du terminal 10 dans le réseau.

Il envoie alors une réponse HTTP au terminal 10, comprenant une instruction de redirection HTTP vers une adresse IP du serveur CS1 sélectionné, adresse notée "@CS1". La session S0 peut alors être fermée.

A ce stade, le serveur 20 met à jour la table de correspondances 23 pour mémoriser que le terminal 10 établit une connexion pour avoir une session de communication avec le serveur de contenus CS1. A noter que cette table de correspondances 23 peut être mémorisée dans un module DNS (fonction de résolution de nom de domaine en adresse IP) du réseau CDN, référencé CDN-DNS sur la figure. Le contrôleur CDNC et le module CDN-DNS réalisent ensemble les fonctions du module de gestion 21 de la **figure 1****,** et le CDN-DNS celles du module 22.

Bien entendu, cette table de correspondances 23 peut toutefois être mémorisée en d'autres emplacements du réseau CDN, les échanges d'informations de cette table comme vus par la suite étant alors adaptés entre les différents équipements protagonistes.

A l'étape E104, le contrôleur CDNC envoie, au serveur de contenus CS1 sélectionné, un message d'activation du service d'IPTV pour la fourniture du contenu C1 au terminal 10. Ce message d'activation autorise le serveur de contenus CS1 à établir avec le terminal 10 une session IPTV et indique que celle-ci doit être bidirectionnelle en terme d'échanges d'événements.

C'est notamment le cas des sessions de type Websocket défini par l'IETF auxquelles est adjointe l'API Server-Sent Events définie par le W3C. Dans ce cas, les terminaux 10 et les serveurs CS1 peuvent supporter des sessions en version Websocket et l'API Server-Sent Events, par exemple par la présence d'un navigateur compatible HTML5.

Ce type de session va permettre l'échange d'événements entre le serveur CS1 et le terminal 10 pour organiser et signaler, dans une même session de communication TCP utilisée pour la session IPTV, l'assemblage intelligent des données relatives à plusieurs services accédés,.

A l'étape E106, conformément à l'instruction de redirection, le terminal 10 initie une session HTTP (S1) sur une connexion TCP avec l'adresse @CS1 du serveur de contenus CS1. Cette session est prévue pour la transmission des données IPTV C1 depuis le serveur de contenus CS1 vers le terminal 10.

A l'étape E108 faisant suite à l'initialisation de la session S1 par le terminal 10, le serveur de contenus CS1 demande au terminal 10 de mettre à niveau la session S1 pour qu'elle supporte un mode d'échange bidirectionnel d'événements (ou mode de signalisation bidirectionnelle), dans lequel les échanges entre le serveur et le terminal sont asynchrones. Cette demande peut être intégrée à une réponse des messages HTTP échangés lors de l'initialisation de la session S1 ou dans une logique Javascript chargée par le terminal 10 lors des premiers échanges.

A l'étape E110, le terminal met à niveau la session S1, par exemple en la convertissant en Websocket. Si le terminal 10 ne dispose pas déjà de l'API Server-Sent Events, celle-ci peut être chargée par celui-ci sous forme d'API Javascript depuis le serveur de contenus CS1.

Lors de l'établissement de cette session S1, le terminal utilisateur 10 peut par ailleurs pousser au serveur de contenus CS1 des préférences utilisateur (ou terminal) pour régir l'assemblage par le module d'assemblage 33.

A ce stade, on dispose donc d'une connexion TCP (31) supportant une session bidirectionnelle en termes d'échange d'événements, entre le serveur de contenus CS1 et le terminal utilisateur 10 requerrant. Les données de contenu C1 (vidéo VOD) sont ensuite transmises de façon classique au terminal utilisateur 10 sur cette session S1 à signalisation bidirectionnelle (étape E112), lequel terminal procède alors à l'affichage du contenu C1 pour l'utilisateur.

Au cours de cette visualisation, l'utilisateur souhaite accéder en parallèle à d'autres services (phase P2). Pour des raisons de concision, on ne décrit ici que l'accès à un seul autre service tiers, par exemple un accès à l'application www.foo.com à l'aide d'un navigateur web exécuté en parallèle de la visualisation du contenu C1.

L'invention s'applique cependant à l'accès par un même utilisateur à un grand nombre de services tiers alors que la session de communication TCP 31 (ici la session WebSocket S1) est en cours. Pour ce faire, les étapes suivantes sont réitérées pour chaque service tiers accédé.

Bien entendu, l'utilisateur peut disposer de plusieurs sessions de communication à signalisation bidirectionnelle courantes et l'invention peut être appliquée à chacune de ces sessions de communication pour accéder à autant voire plus de services tiers.

Pour rappel, le module de gestion 21 dispose en mémoire de la table de correspondances 23 (ici mémorisé dans le module CDN-DNS) qui précise pour chaque application et contenu, les serveurs et adresses IP correspondantes, ainsi que pour chaque serveur 30 du réseau CDN, un ensemble d'adresses IP unicast de ce serveur et les applications ou contenus associés à ces adresses IP unicast.

Cette table peut évoluer en fonction de nouvelles applications détectées par observation du trafic au fil de l'eau par l'opérateur du réseau CDN.

A l'étape E200, l'utilisateur souhaite accéder au contenu de la page d'URL www.foo.com/url1, en saisissant par exemple cette adresse dans la barre d'adresses d'un navigateur web supportant le HTML5.

La validation de cette adresse saisie conduit le terminal 10 à émettre une première requête DNS (REQ-DNS) de résolution de nom de domaine, pour connaître l'adresse IP d'un serveur 40 associée au service "www.foo.com". Cette requête est la première requête dans le processus d'établissement d'une session de communication avec un serveur fournissant ce service.

A l'étape E202, cette requête est interceptée par un équipement du fournisseur d'accès qui gère également le réseau CDN, ici par exemple au niveau d'un routeur 50. Dans ce cas, la requête n'atteint pas le ou les serveurs DNS classiquement mis en oeuvre.

Cette interception peut être mise en oeuvre par des moyens matériels classiques pour détecter tout paquet de données à destination d'un serveur DNS ou à destination d'un port 53 généralement utilisé pour de tels serveurs. Bien entendu l'invention peut mettre en oeuvre d'autres types d'interception, et pas uniquement sur des requêtes DNS.

Par exemple, l'interception peut être réalisée sur la base d'adresses IP de serveurs web prédéfinies. Une telle interception permet de cibler l'application de l'invention à certains services uniquement. En variante, il peut s'agir d'intercepter tout type de message de découverte et d'attachement de services, par exemple des requêtes DHCP (pour *"Dynamic Host Configuration Protocof"*), ARP (pour *"Address resolution protocol"* ou protocole de résolution d'adresse) ou de découverte de serveurs pour Fast Zapping ou autres listes de chaînes ou programmes TV par exemple.

A l'étape E204, la requête DNS interceptée est transmise automatiquement au module CDN-DNS du serveur de gestion 20, par paramétrage préalable du routeur 50.

Le module CDN-DNS accède à la table de correspondances 23 pour résoudre la requête DNS. A l'aide de cette table de correspondances 23, le module CDN-DNS détermine:
- que le terminal 10 requérant dispose déjà d'une session de communication 31 (la session WebSocket S1) avec le serveur de contenus référencé CS1; c'est cette session de communication qui aura vocation, selon l'invention, à supporter le flux de données des services relatifs aux autres services demandés par l'utilisateur;
- un serveur 40 le plus approprié (en fonction de la proximité, charge, politiques en vigueur) pour le terminal 10 et dont une adresse correspond au service "www.foo.com", disons le serveur srv4.foo.com;
- l'adresse IP unicast du serveur CS1 qui est associée au serveur srv4.foo.com, notée "UNI@1CS1" dans notre exemple.

A noter que dans le cas où aucune session de communication 31 (et donc session WebSocket S1) n'existe pour le terminal 10 émetteur de la requête DNS interceptée (avec l'un quelconque des serveurs 30 du CDN), le module CDN-DNS élit un des serveurs de contenus 30 du réseau CDN, notamment un serveur proche géographiquement du terminal 10, puis détermine une adresse IP unicast associée au service demandé comme expliqué précédemment. De plus, la table de correspondances 23 est mise à jour pour indiquer qu'une session de communication 31 (de type WebSocket) s'établit entre ce serveur élu et le terminal 10. La mise en oeuvre de l'invention permet en outre à cette session de communication de supporter la transmission de données relatives à d'autres services accédés.

L'adresse UNI@1CS1 obtenue est ensuite renvoyée (E206) au terminal 10, en réponse à la requête DNS initiale. En respectant les mécanismes classiques DNS, l'invention permet ainsi d'obtenir une redirection automatique et transparente (pour le terminal) du terminal 10 vers le serveur de contenus CS1 avec lequel il a déjà une session de communication 31 établie. Les mécanismes sont similaires en cas d'interception de requêtes DHCP, ARP, etc.

Compte tenu de cette "transparence", le terminal émet une requête (REQ-ACC) HTTP d'accès à la page www.foo.com/url1 en tenant compte de l'adresse UNI@1CS1 reçue en retour de la requête DNS. La requête d'accès REQ-ACC prend donc la forme "HTTP GET UNI@1CS1/url1", où "url1" est l'adresse relative dans le service "www.foo.com" où est hébergé le contenu souhaité.

Cette requête est à destination du serveur de contenus CS1 (étape E208) et non à destination du serveur tiers 40 hébergeant le service demandé. La redirection du terminal 10 vers le serveur CS1 est donc obtenue.

A détection de la requête REQ-ACC sur l'adresse UNI@1CS1, le serveur CS1 informe tout d'abord le terminal 10, en utilisant notamment un événement "Server-Sent Event" dans la session WebSocket S1 déjà existante, que la réponse à la requête d'accès sera envoyée dans cette même session S1 (étape E210). Le serveur CS1 met alors fin à la session HTTP initiée à l'étape E208 par le terminal 10 (étape E212).

A l'étape E214, le serveur CS1 émet une requête au serveur de gestion 20, ici au module CDN-DNS, pour traduire l'adresse UNI@1CS1/url1 en une adresse de serveur tiers 40 supportant le service associé à cette adresse unicast.

A l'étape E216, le CDN-DNS détermine, par simple consultation de la table de correspondances 23, le serveur 40 et l'adresse IP (notée "@40") correspondante associés à l'adresse IP unicast UNI@1CS1 utilisée lors des étapes E206 et E208.

Comme évoqué précédemment, le serveur tiers 40 choisi peut être celui directement associé à l'adresse UNI@1CS1 dans la table de correspondances 23.

Toutefois, dans le cas où cette table 23 précise pour chaque serveur tiers 40 les contenus hébergés par ceux-ci (plusieurs serveurs du service www.foo.com pouvant héberger plus ou moins de contenus), le serveur tiers 40 du service www.foo.com le plus à même de fournir le contenu 'url1' demandé est choisi. Dans ce cas, l'adresse UNI@1CS1 permet de déterminer le service concerné (www.foo.com) du fait de l'association dans la table, puis l'adresse relative d'hébergement 'url1' permet de sélectionner un serveur tiers 40 de ce service approprié pour la fourniture du contenu.

En appliquant cette approche à notre exemple ci-dessus, c'est toujours le serveur 'srv4.foo.com' qui est retourné par le serveur de gestion 20. Toutefois, si le contenu à accéder avait été 'url2', le serveur de gestion aurait indiqué d'utiliser le serveur 'srv34.foo.com'.

Cette sélection par rapport aux contenus évite la mise en oeuvre de processus de redirection du serveur de contenus CS1 s'il sollicite d'abord un serveur tiers n'ayant pas le contenu demandé.

L'adresse IP du serveur 40, @40/url1 (correspondant à 'srv4.foo.com/url1'), est ainsi renvoyée par le module CDN-DNS au serveur CS1.

Connaissant l'adresse @40, le serveur de contenus CS1 établit de façon classique une session S2 de communication avec le serveur tiers 'srv4.foo.com', pour le compte du terminal 10 (étape E218). Pour des accès web, cette session S2 est une session HTTP sur une connexion TCP.

Ainsi, le serveur de contenus CS1 récupère (E220) les données relatives au site web demandé par le terminal 10, notamment des données de contenu et des données de signalisation (étape E220).

A l'étape E222, le serveur de contenus 30 assemble les données obtenues pour les délivrer au terminal 10, ici les données récupérées à l'adresse @40/url1 sur le serveur 40 avec les données C1 (et autres données de signalisation) délivrées directement par le serveur de contenus CS1.

Dans un mode de réalisation, des règles d'assemblage sont utilisées à ce stade, par exemple, pour tenir compte des préférences ou ressources disponibles mentionnées précédemment: mettre en pause une vidéo diffusée lorsque l'utilisateur répond à un appel téléphonique sur IP, mise en priorité basse des sessions de téléchargements au profit des contenus de direct, ajustement du format (haute définition ou définition standard) d'une vidéo diffusée selon le ou les services accédés en parallèle, etc.

Il ressort donc que c'est le serveur de contenus CS qui a le contrôle sur les sessions relatives aux services demandés par un même utilisateur.

L'étape suivante E224 illustre alors la transmission des données ainsi assemblées entre le serveur de contenus CS1 et le terminal 10.

La session Websocket S1 est ainsi le support des échanges entre le terminal 10 et le serveur CS1 permettant au terminal d'obtenir l'ensemble du service www.foo.com sollicité.

Par exemple, pour le chargement d'une page web, l'ensemble des chargements élémentaires (icônes, photos, etc.) sont réalisés au travers de cette session de communication S1, et non plus à l'aide d'une pluralité de nouvelles sessions TCP avec le serveur 40.

Du côté du terminal, les données assemblées dans la session de communication S1 sont récupérées, désassemblées et affichées sur le terminal 10. Par exemple, les données IPTV sont affichées dans un lecteur de contenus multimédia et les données du site 'www.foo.com/url1' dans un navigateur.

A noter que si l'utilisateur veut accéder à une nouvelle page de l'application www.foo.com, par exemple www.foo.com/url2, s'il a encore en mémoire DNS la réponse à la requête REQ-DNS ci-dessus (étape E206), il émet sa nouvelle requête d'accès REQ-ACC directement sur l'adresse IP UNI@1CS1 du serveur de contenus CS1: "HTTP GET UNI@1CS1/url2". Le traitement est ensuite similaire à celui des étapes E210 et suivantes (notamment utilisation du serveur 'srv34.foo.com').

En revanche si le cache DNS du terminal 10 a été vidé, toute la phase P2 est reproduite.

Les règles d'assemblage évoquées ci-dessus sont mises en oeuvre de façon dynamique de telle sorte que lorsqu'il est mis fin à un des services transportés sur la session de communication S1, les données des autres services sont ajustées à leur tour pour tirer profit au mieux des ressources disponibles et/ou des préférences utilisateurs/opérateurs. Une même mise en oeuvre dynamique peut être fonction de l'activité (en quantité de données par exemple) de chacun des services.

Les exemples qui précèdent ne sont que des modes de réalisation de l'invention qui ne s'y limite pas.

Notamment, bien que dans les exemples illustratifs de l'invention, l'interception de la requête DNS, l'assemblage des flux relatifs aux services sollicités et la fourniture du contenu C1 sont réalisés au niveau d'un même serveur de contenus du réseau CDN, d'autres équipements du même opérateur peuvent être utilisés. Par exemple, ces trois fonctions peuvent être réparties en 2 ou 3 équipements.

L'équipement mettant en oeuvre l'opération d'assemblage peut par exemple établir une session WebSocket S1 avec le terminal 10 et des sessions avec les serveurs 30 et/ou 40 pour récupérer les données relatives à chacun des services avant de les assembler. Dans ce cas, des adaptations dans les échanges de messages (avec le contrôleur CDNC et le module CDN-DNS) pour traiter la requête interceptée, rediriger le terminal 10, autoriser la session S1, etc. sont apportées, et ne soulèvent pas de difficulté particulière pour l'homme de l'art.

A titre d'exemple, l'interception et l'assemblage peuvent être mises en oeuvre au niveau d'une plateforme ou passerelle MSAN (*Multi-Service access node*) ou au niveau d'un contrôleur de réseau radio (RNC - *Radio Network Controller*). Dans un cas particulier, le serveur de contenus 30 est alors hébergé dans cet équipement (MSAN ou RNC).

Par ailleurs, dans l'exemple décrit ci-dessus, une requête DNS relative à un deuxième service et émise par le terminal 10 est interceptée pour la mise en oeuvre de l'invention. Toutefois en variante, il peut s'agir d'autres types de messages ou requêtes concernant un deuxième service qui sont interceptés, tels qu'une requête DHCP ou ARP.

Par exemple, lorsqu'un utilisateur reçoit un appel téléphonique sur IP (VoIP), c'est le message de signalisation entrant à destination du terminal 10 qui peut être redirigé puis assemblé dans la session WebSocket S1 pour mettre en oeuvre l'invention. Dans ce cas, l'émetteur du message de signalisation est redirigé vers le serveur 20, qui va lui renvoyer l'adresse du serveur de contenus CS1 avec lequel le terminal 10 détient une session WebSocket S1 courante. Le serveur CS1 indique alors, dans la session WebSocket S1 déjà existante (et bidirectionnelle à ce stade) avec le terminal 10, l'appel entrant à l'utilisateur final du terminal 10.

Les échanges ultérieurs relatifs à l'appel téléphonique sont alors menés via cette session WebSocket S1, évitant une compétition aveugle entre les sessions IPTV et VoIP.

## Revendications

1. Procédé de gestion de sessions de communication lors de l'accès, à partir d'un équipement utilisateur (10), à des services fournis par des dispositifs ressources (30, 40) d'un réseau de communication, le procédé comprenant une étape d'établissement (P1) d'une première session de communication (31, S1) entre un premier équipement du réseau (30, CS1) et l'équipement utilisateur (10) pour la transmission (E112) de données (C1) relatives à un premier service, **caractérisé en ce qu'**il comprend:
une étape d'interception (E202) d'un message (REQ-DNS) généré lors de l'établissement d'un accès à un deuxième service par l'équipement utilisateur (10) pour contrôler une redirection dudit équipement utilisateur vers le premier équipement de réseau aux fins d'obtenir des données relatives au deuxième service, et
une étape d'assemblage (E222), par le premier équipement (30, CS1), de données relatives au deuxième service et reçues d'un dispositif ressource correspondant (40), avec les données (C1) relatives au premier service, de sorte à transmettre (E212) l'ensemble des données à l'équipement utilisateur (10) via ladite première session de communication (31, S1).

2. Procédé selon la revendication 1, dans lequel le message intercepté est une première requête de découverte et d'attachement de services relative au deuxième service et émise par l'équipement utilisateur, et
le procédé comprenant, en réponse à cette première requête, la transmission (E206) audit équipement utilisateur (10) d'une adresse réseau (UNI@1CS1) dudit premier équipement du réseau (30, CS1) pour qu'il (10) s'y connecte afin d'accéder audit deuxième service.

3. Procédé selon la revendication 2, comprenant une étape de détermination (E204), en fonction dudit deuxième service visé par ladite requête interceptée (REQ-DNS), de ladite adresse réseau transmise (UNI@1CS1) parmi une pluralité d'adresses réseau disponibles pour accéder au premier équipement et associées à une pluralité respective de services.

4. Procédé selon la revendication 2, comprenant, en réponse à une requête d'accès (REQ-ACC) au deuxième service émise par l'équipement utilisateur (10) sur l'adresse réseau (UNI@1CS1) du premier équipement (30, CS1) qui a été transmise, une étape d'établissement (E218) d'au moins une deuxième session de communication (S2) entre le dispositif ressource (40) fournissant le deuxième service et le premier équipement (30, CS1) pour la transmission (E220) des données relatives au deuxième service, pour le compte dudit équipement utilisateur (10).

5. Procédé selon la revendication 4, dans lequel ledit dispositif ressource est déterminé à partir d'une table de correspondances référençant une pluralité de dispositifs ressources et les services associés qu'ils fournissent, et le procédé comprend l'enregistrement d'au moins un nouveau dispositif ressource dans ladite table de correspondances à l'initiative de ce nouveau dispositif ressource.

6. Procédé selon la revendication 1, dans lequel ladite première session de communication est une session à signalisation bidirectionnelle (S1).

7. Procédé selon la revendication 6, comprenant l'émission préalable (E108), par le premier équipement et à destination de l'équipement utilisateur, d'une demande de mise à niveau de ladite première session de communication en une session à signalisation bidirectionnelle.

8. Procédé selon la revendication 6 prise dans la dépendance de la revendication 4, dans lequel, en réponse à la requête d'accès (REQ-ACC) au deuxième service émise par l'équipement utilisateur (10) sur l'adresse réseau (UNI@1CS1) du premier équipement (30, CS1) qui a été transmise, le premier équipement renvoie (E210), dans ladite session à signalisation bidirectionnelle (S1), un événement à l'équipement utilisateur lui indiquant que les données de réponse à la requête d'accès seront transmises via ladite session à signalisation bidirectionnelle.

9. Procédé selon la revendication 1, dans lequel ledit assemblage est fonction de règles prédéfinies d'ajustement des données relatives aux services.

10. Procédé selon la revendication 9, dans lequel lesdites règles prédéfinies sont mémorisées au sein du premier équipement.

11. Procédé de gestion de l'accès, à partir d'un équipement utilisateur (10), à des services fournis par des dispositifs ressources (30, 40) dans un réseau de communication, le procédé comprenant la transmission (E112) de données (C1) relatives à un premier service dans une session de communication établie entre un premier équipement du réseau (30, CS1) et l'équipement utilisateur (10), **caractérisé en ce qu'**il comprend:
une étape de mise à jour (E110) de la session de communication en une session à signalisation bidirectionnelle (S1)
une étape de redirection (E206) de l'équipement utilisateur souhaitant accéder à un deuxième service vers ledit premier équipement
une étape d'assemblage (E222), par le premier équipement (30, CS1), de données relatives au deuxième service et reçues d'un dispositif ressource correspondant (40), avec les données (C1) relatives au premier service, de sorte à transmettre (E212) l'ensemble des données à l'équipement utilisateur (10) via ladite session de communication à signalisation bidirectionnelle.

12. Système de gestion de sessions de communication lors de l'accès, à partir de l'équipement utilisateur (10), à des services fournis par des dispositifs ressources (30, 40) d'un réseau de communication, le système comprenant:
des moyens pour établir une première session de communication (31, S1) entre un premier équipement réseau (30, CS1) et l'équipement utilisateur (10) pour la transmission de données (C1) relatives à un premier service;
des moyens d'interception (50) d'un message (REQ-DNS) généré lors de l'établissement d'un accès à une deuxième service par l'équipement utilisateur (10) pour contrôler une redirection dudit équipement utilisateur vers le premier équipement aux fins d'obtenir des données relatives au deuxième service, et
et dans lequel le premier équipement (30, CS1) comprend des moyens d'assemblage (33) de données relatives au second service et reçues d'un dispositif ressource correspondant (40), avec les données (C1) relatives au premier service, de sorte à transmettre l'ensemble des données à l'équipement utilisateur (10) via ladite première session de communication (31, S1).

13. Système selon la revendication 12, comprenant une table de correspondances (23) comprenant, pour chaque équipement (CS) d'une pluralité de premiers équipements (30) disposant de dits moyens d'assemblage (33), l'association d'une pluralité d'adresses réseau (UNI@1CS1) de l'équipement à une pluralité correspondante de dispositifs ressources (40) mettant en oeuvre des services.

## Patentansprüche

1. Verfahren zum Verwalten von Kommunikationssitzungen beim Zugriff ausgehend von einem Benutzergerät (10) auf Dienste, die von Ressourcenvorrichtungen (30, 40) eines Kommunikationsnetzes bereitgestellt werden, wobei das Verfahren einen Schritt des Einrichtens (P1) einer ersten Kommunikationssitzung (31, S1) zwischen einer ersten Netzwerkausrüstung (30, CS1) und dem Benutzergerät (10) zum Übertragen (E112) von Daten (C1) in Bezug auf einen ersten Dienst aufweist, **dadurch gekennzeichnet, dass** es aufweist:
einen Schritt des Abfangens (E202) einer Nachricht (REQ-DNS), die bei dem Einrichten eines Zugriffs auf einen zweiten Dienst durch das Benutzergerät (10) erzeugt wird, um ein Umleiten des Benutzergeräts zu der ersten Netzwerkausrüstung zu steuern, um Daten, die sich auf den zweiten Dienst beziehen, zu erhalten, und
einen Schritt des Zusammenstellens (E222) durch die erste Ausrüstung (30, CS1) von Daten, die sich auf den zweiten Dienst beziehen und von einer entsprechenden Ressourcenvorrichtung (40) empfangen werden, mit den Daten (C1), die sich auf den ersten Dienst beziehen, derart, um alle Daten über die erste Kommunikationssitzung (31, S1) an das Benutzergerät (10) zu übertragen (E212).

2. Verfahren nach Anspruch 1, wobei die abgefangene Nachricht eine erste Anfrage des Entdeckens und des Anhängens von Diensten ist, die sich auf den zweiten Dienst bezieht und von dem Benutzergerät ausgegeben wird, und
wobei das Verfahren als Antwort auf diese erste Anfrage das Senden (E206) an das Benutzergerät (10) einer Netzwerkadresse (UNI@1CS1) der ersten Netzwerkausrüstung (30, CS1) aufweist, damit es (10) sich damit verbindet, um auf den zweiten Dienst zuzugreifen.

3. Verfahren nach Anspruch 2, aufweisend einen Schritt des Bestimmens (E204) in Abhängigkeit von dem zweiten Dienst, auf den sich die abgefangene Anfrage (REQ-DNS) bezieht, der gesendeten Netzwerkadresse (UNI@1CS1) unter einer Vielzahl von Netzwerkadressen, die für das Zugreifen auf die erste Ausrüstung verfügbar sind und mit einer jeweiligen Vielzahl von Diensten verbunden sind.

4. Verfahren nach Anspruch 2, aufweisend als Antwort auf eine Zugriffsanfrage (REQ-ACC) auf den zweiten Dienst, die von dem Benutzergerät (10) über die Netzwerkadresse (UNI@1CS1) der ersten Ausrüstung (30, CS1), die gesendet worden ist, ausgegeben wird, einen Schritt des Einrichtens (E218) von mindestens einer zweiten Kommunikationssitzung (S2) zwischen der Ressourcenvorrichtung (40), die den zweiten Dienst bereitstellt, und der ersten Ausrüstung (30, CS1) zum Übertragen (E220) der Daten in Bezug auf den zweiten Dienst im Auftrag des Benutzergeräts (10).

5. Verfahren nach Anspruch 4, wobei die Ressourcenvorrichtung ausgehend von einer Entsprechungstabelle bestimmt wird, die auf mehrere Ressourcenvorrichtungen und die verbundenen Dienste, die sie bereitstellen, Bezug nimmt, und das Verfahren das Eintragen von mindestens einer neuen Ressourcenvorrichtung in der Entsprechungstabelle auf Initiative dieser neuen Ressourcenvorrichtung aufweist.

6. Verfahren nach Anspruch 1, wobei die erste Kommunikationssitzung eine bidirektionale Signalisierungssitzung (S1) ist.

7. Verfahren nach Anspruch 6, aufweisend das vorausgehende Senden (E108) durch die erste Ausrüstung und an das Benutzergerät einer Upgradeanfrage der ersten Kommunikationssitzung auf eine bidirektionale Signalisierungssitzung.

8. Verfahren nach Anspruch 6 in Abhängigkeit von Anspruch 4, wobei als Antwort auf die Zugriffsanfrage (REQ-ACC) auf den zweiten Dienst, die von dem Benutzergerät (10) über die Netzwerkadresse (UNI@1CS1) der ersten Ausrüstung (30, CS1), die gesendet worden ist, ausgegeben wird, die erste Ausrüstung in der bidirektionalen Signalisierungssitzung (S1) ein Ereignis an das Benutzergerät zurückschickt (E210), das ihm anzeigt, dass die Antwortdaten auf die Zugriffsanfrage über die bidirektionale Signalisierungssitzung übertragen werden.

9. Verfahren nach Anspruch 1, wobei das Zusammenstellen von vordefinierten Regeln der Anpassung der Daten, die sich auf die Dienste beziehen, abhängig ist.

10. Verfahren nach Anspruch 9, wobei die vordefinierten Regeln in der ersten Ausrüstung gespeichert werden.

11. Verfahren zum Verwalten des Zugriffs ausgehend von einem Benutzergerät (10) auf Dienste, die von Ressourcenvorrichtungen (30, 40) in einem Kommunikationsnetz bereitgestellt werden, wobei das Verfahren das Übertragen (E112) von Daten (C1) in Bezug auf einen ersten Dienst in einer Kommunikationssitzung aufweist, die zwischen einer ersten Netzwerkausrüstung (30, CS1) und dem Benutzergerät (10) eingerichtet wird, **dadurch gekennzeichnet, dass** es aufweist:
einen Schritt des Upgrades (E110) der Kommunikationssitzung auf eine bidirektionale Signalisierungssitzung (S1),
einen Schritt des Umleitens (E206) des Benutzergeräts, das auf einen zweiten Dienst zugreifen möchte, zu der ersten ersten Ausrüstung,
einen Schritt des Zusammenstellens (E222) durch die erste Ausrüstung (30, CS1) von Daten, die sich auf den zweiten Dienst beziehen und von einer entsprechenden Ressourcenvorrichtung (40) empfangen werden, mit den Daten (C1), die sich auf den ersten Dienst beziehen, derart, um alle Daten über die bidirektionale Signalisierungssitzung an das Benutzergerät (10) zu übertragen (E212).

12. System zum Verwalten von Kommunikationssitzungen beim Zugriff von einem Benutzergerät (10) auf Dienste, die von Ressourcenvorrichtungen (30, 40) eines Kommunikationsnetzes bereitgestellt werden, wobei das System aufweist:
Mittel zum Einrichten einer ersten Kommunikationssitzung (31, S1) zwischen einer ersten Netzwerkausrüstung (30, CS1) und dem Benutzergerät (10) zum Übertragen von Daten (C1) in Bezug auf einen ersten Dienst,
Mittel zum Abfangen (50) einer Nachricht (REQ-DNS), die bei dem Einrichten eines Zugriffs auf einen zweiten Dienst durch das Benutzergerät (10) erzeugt wird, um ein Umleiten des Benutzergeräts zu der ersten Netzwerkausrüstung zu steuern, um Daten, die sich auf den zweiten Dienst beziehen, zu erhalten, und
wobei die erste Ausrüstung (30, CS1) Mittel zum Zusammenstellen (33) von Daten aufweist, die sich auf den zweiten Dienst beziehen und von einer entsprechenden Ressourcenvorrichtung (40) empfangen werden, mit den Daten (C1), die sich auf den ersten Dienst beziehen, derart, um alle Daten über die erste Kommunikationssitzung (31, S1) an das Benutzergerät (10) zu übertragen.

13. System nach Anspruch 12, aufweisend eine Entsprechungstabelle (23), die für jede Ausrüstung (CS) von einer Vielzahl von ersten Ausrüstungen (30), die über die Mittel zum Zusammenstellen (33) verfügen, die Verbindung von einer Vielzahl von Netzwerkadressen (UNI@1CS1) der Ausrüstung mit einer entsprechenden Vielzahl von Ressourcenvorrichtungen (40), die die Dienste umsetzen, aufweist.

## Claims

1. Method for managing communication sessions when accessing, from a user appliance (10), services provided by resource devices (30, 40) of a communication network, the method comprising a step (P1) of establishing a first communication session (31, S1) between a first appliance of the network (30, CS1) and the user appliance (10) for the transmission (E112) of data (C1) relating to a first service, **characterized in that** it comprises:
a step (E202) of interception of a message (REQ-DNS) generated when establishing access to a second service by the user appliance (10) in order to control redirection of said user appliance to the first network appliance for the purpose of acquiring data relating to the second service, and
a step (E222) of assembly, by the first appliance (30, CS1), of data relating to the second service and received from a corresponding resource device (40), with the data (C1) relating to the first service, so as to transmit (E212) all of the data to the user appliance (10) via said first communication session (31, S1).

2. Method according to Claim 1, wherein the intercepted message is a first service association and discovery request relating to the second service and sent by the user appliance, and
the method comprising, in response to this first request, transmission (E206), to said user appliance (10), of a network address (UNI@1CS1) of said first appliance of the network (30, CS1) such that said user appliance (10) connects thereto in order to access said second service.

3. Method according to Claim 2, comprising a step (E204) of determining, on the basis of said second service targeted by said intercepted request (REQ-DNS), said transmitted network address (UNI@1CS1) from among a plurality of network addresses available for accessing the first appliance and associated with a respective plurality of services.

4. Method according to Claim 2, comprising, in response to a request (REQ-ACC) to access the second service, sent by the user appliance (10) to the network address (UNI@1CS1) of the first appliance (30, CS1) that has been transmitted, a step (E218) of establishing at least one second communication session (S2) between the resource device (40) providing the second service and the first appliance (30, CS1) for transmitting (E220) the data relating to the second service, on behalf of said user appliance (10).

5. Method according to Claim 4, wherein said resource device is determined on the basis of a correspondence table referencing a plurality of resource devices and the associated services that they provide, and the method comprises recording at least one new resource device in said correspondence table on the initiative of this new resource device.

6. Method according to Claim 1, wherein said first communication session is a bidirectional signalling session (S1).

7. Method according to Claim 6, comprising the prior sending (E108), by the first appliance to the user appliance, of a request to amend said first communication session to a bidirectional signalling session.

8. Method according to Claim 6 when said claim is dependent on Claim 4, wherein, in response to the request (REQ-ACC) to access the second service, sent by the user appliance (10) to the network address (UNI@1CS1) of the first appliance (30, CS1) that has been transmitted, the first appliance returns (E210), in said bidirectional signalling session (S1), an event to the user appliance telling it that the data in response to the access request will be transmitted via said bidirectional signalling session.

9. Method according to Claim 1, wherein said assembly depends on predefined rules for adjusting the data relating to the services.

10. Method according to Claim 9, wherein said predefined rules are stored in the first appliance.

11. Method for managing access, from a user appliance (10), to services provided by resource devices (30, 40) in a communication network, the method comprising the transmission (E112) of data (C1) relating to a first service in a communication session established between a first appliance of the network (30, CS1) and the user appliance (10), **characterized in that** it comprises:
a step (E110) of updating the communication session to a bidirectional signalling session (S1)
a step (E206) of redirecting the user appliance wishing to access a second service to said first appliance
a step (E222) of assembly, by the first appliance (30, CS1), of data relating to the second service and received from a corresponding resource device (40), with the data (C1) relating to the first service, so as to transmit (E212) all of the data to the user appliance (10) via said bidirectional signalling communication session.

12. System for managing communication sessions when accessing, from the user appliance (10), services provided by resource devices (30, 40) of a communication network, the system comprising:
means for establishing a first communication session (31, S1) between a first network appliance (30, CS1) and the user appliance (10) for the transmission of data (C1) relating to a first service;
means (50) for interception of a message (REQ-DNS) generated when establishing access to a second service by the user appliance (10) in order to control redirection of said user appliance to the first appliance for the purpose of acquiring data relating to the second service, and
wherein the first appliance (30, CS1) comprises means (33) for assembling data relating to the second service and received from a corresponding resource device (40), with the data (C1) relating to the first service, so as to transmit all of the data to the user appliance (10) via said first communication session (31, S1).

13. System according to Claim 12, comprising a correspondence table (23) comprising, for each appliance (CS) of a plurality of first appliances (30) having said assembly means (33), the association of a plurality of network addresses (UNI@1CS1) of the appliance with a corresponding plurality of resource devices (40) implementing services.
